# FASCICULE DE BREVET EUROPEEN

(11) **EP 1 009 109 B1**
(45) Date de publication et mention de la délivrance du brevet: **04.07.2007**
(21) Numéro de dépôt: 99403094.8
(22) Date de dépôt: 09.12.1999
(51) Int. Cl.: H04B 7/204

(54) **Système de télécommunication et satellite multi-faisceaux utilisable dans un tel système**
Telekommunikationssystem und Mehrstrahlsatellit dafür
Telecommunications system and multi-beam satellite usable for this system

(30) Priorité: 11.12.1998 FR 9815708
(43) Date de publication de la demande: 14.06.2000
(73) Titulaire: EADS ASTRIUM SAS, 31402 Toulouse Cedex 4 (FR)
(72) Inventeur: Boudier, Nicolas, 31320 Castanet-Tolosan (FR); Alberty, Eric, 31130 Fonsegrives (FR); Thomasson, Laurent, 31500 Toulouse (FR)
(74) Mandataire: Loisel, Bertrand

(56) Documents cités:
- US-A- 4 425 639
- US-A- 4 722 083

## Description

La présente invention concerne les systèmes de télécommunication par satellite géostationnaire, permettant des échanges d'informations entre des terminaux terrestres (terminaux d'usager, serveurs, etc.) ayant des besoins en bande passante et en délai de transmission très variés.

Elle concerne plus particulièrement les systèmes utilisant un satellite ou plusieurs ayant plusieurs dizaines de faisceaux (généralement 20 à 60), dont le nombre peut être différent sur les voies montante et descendante. Un tel système est notamment utilisé pour assurer les télécommunications sur l'Europe, avec quarante faisceaux de 0,6° d'ouverture chacun.

Une architecture séduisante consiste à monter sur le satellite une charge utile assurant une connectivité et une flexibilité complètes ainsi qu'une régénération des messages. Voir par example US-A-4,425,639 (Acampora et al.).

La connectivité permet de router le trafic autre que local (c'est-à-dire entre deux terminaux placés dans un même faisceau) d'un faisceau vers un autre. Elle exige la présence sur le satellite d'un dispositif de routage qui oriente les communications directement vers le faisceau dans lequel se trouve le terminal récepteur et réduit au minimum l'utilisation de réseaux terrestres, particulièrement coûteuse dans le cas de liaisons en mode connecté.

La flexibilité est constituée par l'aptitude de la charge utile à échanger de la bande passante, et donc de la capacité, entre faisceaux sur la voie montante et/ou descendante.

La solution qui semble la plus appropriée pour assurer une qualité élevé de communication et remplir les conditions ci-dessus consiste à adopter un protocole de transmission asynchrone, dit ATM, et à prévoir sur le satellite une charge utile assurant une régénération complète aussi bien sur la voie aller (depuis des passerelles au sol destinées à la liaison avec le réseau terrestre vers des terminaux d'usager) que sur la voie de retour (depuis des terminaux d'usager). Mais cette approche oblige à adopter une charge utile complexe et insuffisamment mature, notamment du fait de l'exigence de commutateurs ATM à mémoire d'un type non disponible pour montage sur satellite à l'heure actuelle.

Une autre solution consiste à prévoir la charge utile de façon qu'elle utilise les mêmes faisceaux pour les trajets montant et descendant d'une liaison. Elle se fonde sur l'hypothèse que le trafic local (à l'intérieur d'un même faisceau) entre utilisateurs directs, sans intervention du segment terrestre, est prépondérant.

L'invention vise notamment à fournir un système assurant un compromis satisfaisant entre la complexité de la charge utile du satellite et la réduction de l'utilisation des réseaux terrestres, c'est-à-dire la recherche d'un coût minimum de routage. Accessoirement, l'invention se propose de fournir un système dont les terminaux puissent être dès l'origine prévus de façon à permettre leur utilisation ultérieure dans un système à connectivité et flexibilité complètes, avec des commutateurs ATM à mémoire à bord du satellite.

Dans ce but, l'invention propose un système comprenant un segment spatial ayant au moins un satellite portant une charge utile de télécommunication multi-faisceaux et un segment terrestre comprenant des passerelles d'accès au réseau terrestre réparties à raison d'une dans la couverture de chaque faisceau ou d'un groupe de faisceaux et des terminaux d'usager munis de moyens de liaison radioélectrique avec la charge utile du satellite,
caractérisé en ce que la charge utile comprend :
- sur un trajet aller d'une passerelle vers un terminal d'usager, un organe de routage trame par trame de messages transmis en multiplex temporel (dit TDM ou MRT), et
- sur un trajet retour de terminal d'usager vers une passerelle, un organe de routage fonctionnant groupe de porteuses par groupe de porteuses appartenant à un même faisceau (le groupe d'un faisceau pouvant n'avoir qu'une seule porteuse, mais ayant généralement au moins cinq porteuses dans un système commercial).

Les deux organes peuvent être fusionnés sous forme d'un processeur commun ou appartenir à des processeurs séparés. Une partie de la capacité de transmission peut être figée et réservée aux communications locales, c'est-à-dire à l'intérieur d'un même faisceau, lorsque l'importance du trafic local le justifie. On réduit ainsi la masse de la charge utile et la puissance consommée.

Dans un système du type ci-dessus, le trajet de retour est transparent (ou en d'autres termes non régératif). Il peut notamment utiliser un mode de transmission à accès multiple à répartition de fréquences de porteuse avec, pour chaque porteuse, une distribution de chaque message sur des tranches temporelles de même rang de trames successives (mode dit F/TDMA ou AMRT/F). L'absence de régénération des messages à bord du satellite rend le système ouvert aux évolutions et à des normes nouvelles. Elle peut être compensée par augmentation de la puissance isotrope rayonnée équivalente de la partie radioélectrique des terminaux.

Le trajet aller peut au contraire être régénératif. En général, il utilisera un mode de transmission par multiplexage à répartition temporelle, dit TDM ou MRT, avec transport sans interruption de trames successives regroupées en supertrames.

La charge utile du satellite sera alors prévue pour effectuer successivement, sur le trajet aller, une démodulation, une commutation et une remodulation. Le commutateur peut être de type simple et assurer simplement des interconnexions. Dans une solution plus complexe, le commutateur peut présenter une mémoire de stockage de trames MRT. Il est alors possible d'orienter les paquets de données des trames entrantes vers n'importe quel modulateur de sortie en modifiant l'ordre de succession des paquets.

La granulométrie du système (définissant son aptitude à découper la bande passante en fractions plus ou moins faibles) peut être élevée. Sur la voie aller, elle peut être de l'ordre de 1,5 Mbps, grâce à la commutation trame par trame. Sur le trajet de retour, la granulométrie peut être d'environ 5 MHz et correspondre à un débit de 6 x 384 kbps dans des conditions normales.

L'invention propose également un satellite utilisable dans un système de télécommunications ayant un segment terrestre comprenant des passerelles d'accès au réseau terrestre qui comprend :
- sur un trajet un organe de routage trame par trame de messages transmis en multiplex temporel MRT et des moyens de régénération de messages,
- sur un trajet retour, un organe de routage transparent, fonctionnant groupe de porteuses par groupe de porteuses appartenant à un même faisceau, en mode AMRT/F.

Les caractéristiques ci-dessus ainsi que d'autres apparaîtront mieux à la lecture de la description qui suit d'un mode particulier de réalisation, donné à titre d'exemple non limitatif. La description se réfère aux dessins qui l'accompagnent, dans lesquels :
- la figure 1 montre l'architecture générale d'un système, quelques uns seulement des terminaux étant représentés;
- les figures 2 et 3 sont des schémas de principe montrant les operations effectuées sur les voies aller et retour à bord du segment spatial du système ;
- la figure 4 est une représentation schématique de la matrice d'interconnexion à bord du satellite, sur le trajet aller ;
- la figure 5 est un schéma montrant l'allocation de ressources effectuée au niveau de chaque passerelle ;
- la figure 6 est un schéma montrant une constitution possible du flot de données sur le trajet aller ;
- la figure 7 est une variante de la figure 6 ;
- la figure 8 montre un mode possible de synchronisation entre passerelles.

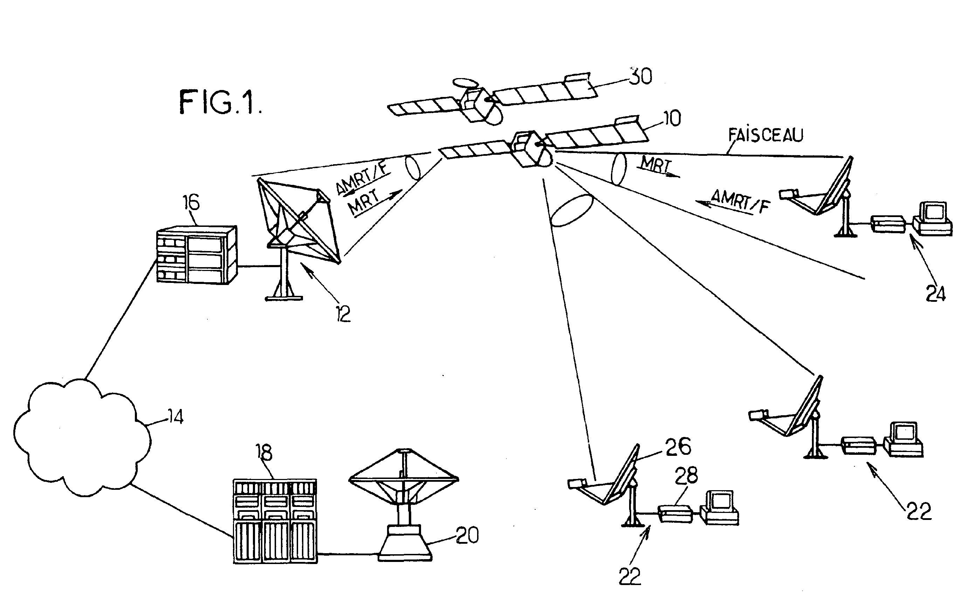

L'architecture dont quelques éléments sont montrés en figure 1 comporte au moins un satellite multi-faisceaux 10 placé sur une orbite géostationnaire. Dans la couverture de chaque faisceau est placée au moins une passerelle terrestre 12 d'accès au réseau terrestre 14. Cette passerelle incorpore un commutateur 16 et des moyens de liaison radiofréquence avec le satellite, par exemple en modulation MDP 4, dite aussi QPSK. En général on utilisera une seule passerelle par faisceau pour simplifier les opérations de synchronisation nécessaires. Toutefois plusieurs passerelles peuvent être réparties.

Le réseau 14, auquel permettent d'accéder les passerelles, est raccordé à un centre de commande de réseau 18. Ce centre de commande règle la configuration pseudo statique des trajets physiques aller et retour, à partir d'une prévision des besoins du trafic ou de la demande réelle. Il incorpore également les moyens de gestion centralisée du réseau.

Les passerelles gèrent de leur côté les ressources avec une orientation connexion. Les ressources physiques leur sont allouées par le centre 18. La fonction des passerelles comprend notamment la gestion des accès multiples, les fonctions de signalisation et les fonctions de noeud pour le trafic à partir des terminaux raccordés au réseau et vers eux.

Le réseau est également relié à une station de télécommande de satellite 20, qui assure la configuration et la surveillance de la charge utile du satellite.

Enfin, on peut rattacher au segment terrestre du réseau des terminaux d'usager fixes 22 et transportables 24 qui peuvent être de différents types en ce qui concerne leurs besoins en bande passante et qui généralement comporteront une partie extérieure 26 et une partie intérieure 28.

Lorsque les besoins en trafic le justifient, un second satellite 30 peut être placé au même emplacement que le satellite 10 sur l'orbite géostationnaire. Ce second satellite peut être prévu pour assurer uniquement des liaisons entre deux terminaux et/ou passerelles qui se trouvent à l'intérieur d'un même faisceau. Le système peut évoluer. Le satellite « transparent », qui exige un recours important aux ressources terrestres, est lancé le premier. Ultérieurement, un satellite présentant des capacités de routage est mis à poste à proximité du premier et coopère avec lui.

Comme on l'a indiqué plus haut, la liaison retour, d'un terminal d'utilisateur 22 ou 24 vers un satellite et de là vers une passerelle, s'effectue en mode AMRT/F, tandis que les liaisons vers les terminaux d'usager s'effectuent en MRT à large bande, partagée par tous les terminaux d'usager situés dans un même faisceau. Le terminal d'usager accède au satellite pour envoyer des demandes, ce qui se traduit généralement par un besoin beaucoup plus faible que les retours d'informations. Le satellite agit en tant que commutateur d'interconnexion et route les porteuses AMRT/F de façon transparente vers la passerelle de destination sur le trajet de retour et il route les messages MRT à large bande, trame par trame, des différentes passerelles vers les faisceaux de destination. La technologie actuelle permet sans difficulté d'adopter un débit de n x 384 kbps pour les demandes provenant d'un terminal d'usager et un débit de l'ordre de 100 Mbps sur l'émission en MRT vers les usagers.

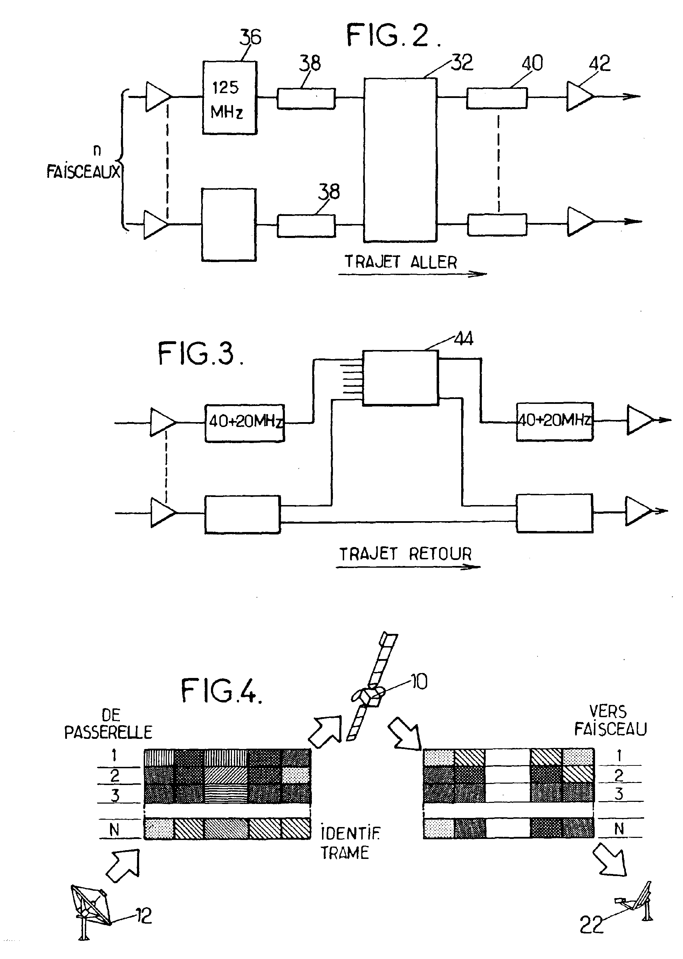

Les traitements effectués par la charge utile du satellite sur les trajets aller et retour sont schématisés respectivement sur les figures 2 et 3.

Sur la figure 2, le commutateur 32 situé sur le trajet aller comporte un même nombre n d'entrées et de sorties. Les communications reçues sur un faisceau sont appliquées à un amplificateur 34 suivi d'un filtre passe-bande 36 et d'un démodulateur 38. Le commutateur, qui fonctionne au niveau trame, oriente les trames vers le faisceau de sortie approprié. Chaque message de sortie est remodulé en 40 et amplifié en 42.

Dans un mode particulier de réalisation, les n entrées sont réparties en deux sous-groupes et chaque signal a une largeur de bande de 125 MHz. Pour assurer une qualité de transmission satisfaisante, les signaux MRT (ou TDM) sont avantageusement soumis à un codage convolutionnel et décodés par un algorithme à maximum de vraisemblance.

Dans ce cas, le commutateur est incorporé à un processeur qui assure la conversion analogique-numérique et la démodulation à l'entrée avant décodage et routage flexible des flots de données binaires codées en MRT, trame par trame, vers le flot de sortie correspondant sur la voie descendante. Le processeur recode, module et effectue une conversion analogique-numérique pour former le flot de bits sur la voie descendante.

Sur le trajet de retour, la charge utile est transparente, comme le montre la figure 3. Elle peut être matérialisée par un processeur. Des trajets directs, indiqués en tirets, peuvent être prévus en plus des trajets qui font l'objet du traitement. Ultérieurement, les liaisons directes peuvent être omises.

A titre d'exemple, chaque signal entrant et chaque signal sortant sur le trajet de retour peut avoir une largeur de bande de 125 MHz, divisée en 150 tranches de 800 kHz. Le processeur 44 effectue une conversion analogique-numérique et un démultiplexage fréquentiel sur chacun des signaux entrants actifs (signaux sur la voie montante). Le démultipLexage de fréquence peut s'effectuer en canaux de 800 kHz. Le processeur effectue le routage et la répartition des canaux sur les voies descendantes appropriées en assurant le multiplexage des canaux de 800 kHz et la conversion numérique-analogique.

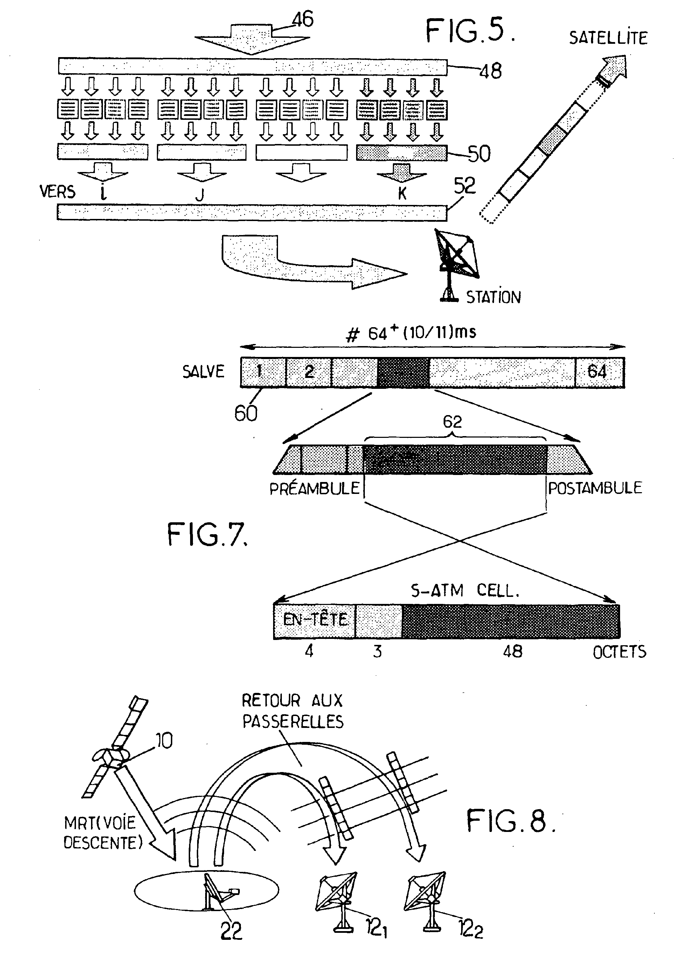

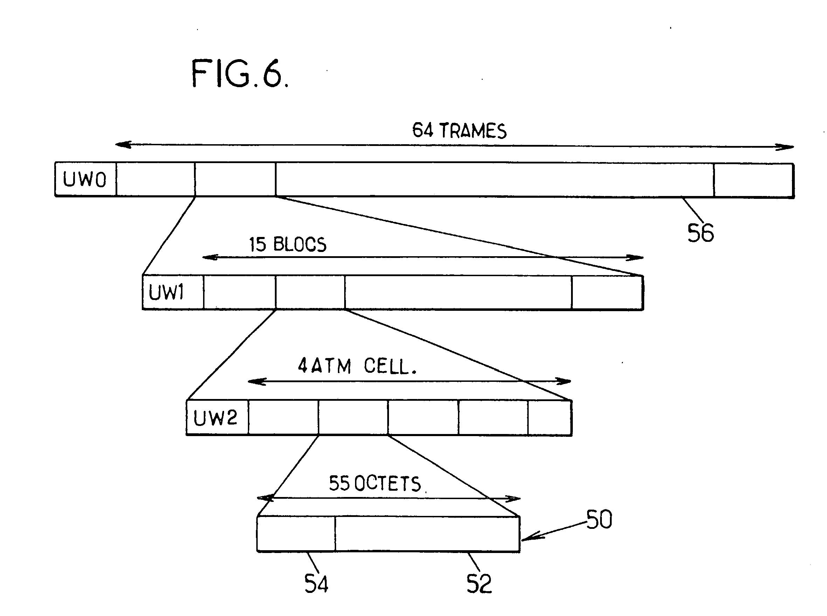

La figure 4 montre un exemple de routage sur le trajet aller, par commutation des trames montantes suivant une matrice d'interconnexion particulière, pour des faisceaux 1 à N. Les trames, au nombre de 64 par exemple, qui composent chaque supertrame MRT montante, sont orientées indépendamment vers un faisceau sur la voie descendante, en respectant une table mémorisée. La matrice d'interconnexion est calculée par le centre de commande de réseau 18 qui attribue, à chaque passerelle, des trames sur le ou les faisceaux de transmission correspondants.

Sur le segment terrestre, le mécanisme d'allocation par les passerelles peut être celui schématisé en figure 5. Le trafic provenant du réseau terrestre et à émettre vers le satellite, schématisé par la flèche 46, est appliqué à un démultiplexeur 48. Celui-ci sépare les cellules de trafic en fonction de leur faisceau de destination et éventuellement en fonction de la nature du service transporté. Des multiplexeurs 50 affectés aux différents faisceaux effectuent un nouveau multiplexage sur un flot unique MRT 52 compatible avec la structure de supertrames éventuellement imposée par la matrice d'interconnexion.

La répartition des données peut être celle donnée en figure 6, utilisant un protocole ATM. Les données utiles sont réparties en cellules 50, qui comportent chacune 55 octets et se composent de l'information 52 et d'un en-tête 54. Les cellules sont regroupées en blocs de quatre cellules précédées d'un en-tête et suivies d'un code correcteur. Les blocs sont à leur tour groupés en trames de 15 blocs précédés d'un en-tête.

Enfin les trames sont regroupées en supertrames 50 avec un en-tête.

Sur la voie de retour, utilisant un protocole ATM, la connectivité est réalisée par commutation de fréquence effectuée par la charge utile, la matrice de connectivité étant calculée par le centre de contrôle et mémorisée à bord du satellite.

Une autre répartition possible des données sur le trajet de retour est schématisée sur la figure 7. La structure de transmission est constituée de trames de 64 salves 60, ce nombre étant choisi comme étant un compromis optimal entre un taux d'accès minimum, notamment pour le trafic et pour la signalisation, et le temps d'accès. Chaque salve comporte 1000 bits, avec une durée d'environ 10 ms. Chaque trame comporte une information utile 62, un préambule et un postambule. Chaque cellule peut de son côté être constituée de 48 octets d'informations, précédée d'un en-tête de 4 octets et d'un code de correction de 3 octets. Une telle structure permet d'atteindre une granularité d'une cellule par salve.

Une telle structure permet un codage convolutionnel de niveau un demi au niveau de la salve et un décodage Viterbi à décision douce ou un maximum de vraisemblance. En plus du codage appliqué à la totalité de la cellule, on a prévu des mesures accroissant la robustesse à l'égard de configurations spécifiques d'erreur sur les liaisons satellite, en particulier le taux de perte de cellules et le taux d'erreurs. Au niveau de la cellule, le durcissement de la robustesse consiste à augmenter la capacité de correction de l'en-tête global, en faisant passer le code correcteur de 1 octet à 3 octets. On peut notamment utiliser un code Reed-Solomon.

Un tel dispositif est susceptible d'évolution lorsque l'on souhaite notamment augmenter le débit par accroissement du nombre de cellules dans la salve.

Sur le trajet aller, la répartition en trames peut comporter trois niveaux hiérarchiques, à savoir des blocs de données constitués de quatre cellules et d'un code de correction d'erreur, des trames constituées de 15 blocs et des supertrames constituées de 64 trames. En vue de faciliter la synchronisation, la durée d'une salve peut être une fraction simple de la durée d'une trame sur le trajet de retour, par exemple un quart de cette durée.

Il est souhaitable que le système comporte des moyens de synchronisation. En effet, l'accès à partir d'un terminal est fondé sur une répartition en fréquence et en temps. Les terminaux doivent en conséquence fonctionner avec une référence temporelle commune pour éviter des collisions entre cellules émises par différents terminaux. Les variations de position du satellite par rapport à sa position de consigne se traduit par des variations de temps de propagation, aggravé éventuellement par le déplacement des terminaux d'usager mobiles.

Cela implique de synchroniser tous les terminaux et éventuellement toutes les passerelles qui se trouvent dans un même faisceau. Il est proposé pour cela d'utiliser, comme horloge commune, le signal MRT reçu par les terminaux sur la voie descendante. Pour chaque faisceau, une passerelle unique 12₁ (figure 8) assure la synchronisation de tous les terminaux et des autres passerelles 12₂ dans la couverture du faisceau.

## Revendications

1. Système de télécommunication par satellite géostationnaire, comprenant un segment spatial ayant au moins un satellite portant une charge utile de télécommunication multi-faisceaux et un segment terrestre comprenant des passerelles (12) d'accès au réseau terrestre, réparties à raison d'une dans la couverture de chaque faisceau ou d'un groupe de faisceaux et des terminaux d'usager (22,24) munis de moyens de liaison radioélectrique avec la charge utile du satellite,
**caractérisé en ce que** la charge utile comprend :
- sur un trajet aller, d'une passerelle vers un terminal d'usager, un organe de routage trame par trame de messages transmis en multiplex temporel, et
- sur un trajet retour, de terminal d'usager vers une passerelle, un organe de routage fonctionnant groupe de porteuses par groupe de porteuses appartenant à un même faisceau.

2. Système selon la revendication 1, **caractérisé en ce que** l'organe de routage sur le trajet de retour est transparent.

3. Système selon la revendication 2, **caractérisé en ce que** l'organe de routage sur le trajet de retour utilise un mode de transmission à accès multiple à répartition de fréquences de porteuse avec, pour chaque porteuse, une distribution de chaque message sur des tranches temporelles de même rang de trames successives.

4. Système selon l'une quelconque des revendications 1 à 3, **caractérisé en ce que** les liaisons vers les terminaux d'usager sur le trajet aller s'effectuent en MRT à large bande, partagée par tous les terminaux d'usager situés dans un même faisceau.

5. Système selon la revendication 1 ou 4, **caractérisé en ce que** l'organe sur le trajet aller comporte un commutateur d'interconnexion (32) précédé d'un amplificateur (34) et d'un filtre passe-bande (36) et d'un démodulateur (38) par faisceau et permet d'orienter les trames vers les faisceaux de sortie, après modulation (40) et amplification (42).

6. Système selon la revendication 4 ou 5, **caractérisé en ce que** l'organe de routage sur le trajet aller effectue une commutation indépendante des trames montantes suivant une matrice d'interconnexion respectant une table mémorisée, calculée par un centre de commande de réseau (18) qui attribue, à chaque passerelle, des trames sur les faisceaux de transmission.

7. Satellite utilisable dans un système de télécommunications ayant un segment terrestre comprenant des passerelles d'accès au réseau terrestre qui comprend :
- sur un trajet aller, un organe de routage trame par trame de messages transmis en multiplex temporel MRT et des moyens de régénération de messages,
- sur un trajet retour, un organe de routage transparent, fonctionnant groupe de porteuses par groupe de porteuses appartenant à un même faisceau, en mode AMRT/F.

## Claims

1. A telecommunication system by a geostationary satellite, comprising a space segment having at least one satellite carrying a multibeam telecommunications payload and a terrestrial segment comprising gateways (12) for access to a terrestrial network, that are distributed at a density of one gateway within the terrestrial coverage of each beam or of a group of beams, and user terminals (22, 24) provided with means for radiocommunication with the payload of the satellite, **characterized in that** the payload comprises:
- on a forward path, from any said gateway to any said user terminal, a frame by frame routing unit for messages transmitted in time division multiplex ; and
- on a return path, from a user terminal to a gateway, a routing unit operating within each group of carriers belonging to a given beam.

2. A system according to claim 1, **characterized in that** the routing unit on the return path is transparent.

3. A system according to claim 2, **characterized in that** the routing unit on the return path operates in multiple access transmission mode with carrier frequency division and with, for each carrier, a distribution of each message over time slots of same rank in successive frames.

4. A system according to any one of claims 1 to 3, **characterized in that** the transmissions toward user terminals on the forward path are in wide band TDM shared between all user terminals in a same beam.

5. A system according to claim 1 or 4, **characterized in that** the routing unit on the forward path has, for each beam, in succession, an amplifier (34), a bandpass filter (36), a demodulator (38) and an interconnection switch (32) and is arranged for directing the frames to the output beams after modulation (40) and amplification.

6. A system according to claim 4 or 5, **characterized in that** the routing unit on the forward path carries out independent switching of the frames on the up link in compliance with an interconnection matrix stored in a table determined by a network control center (18) which allocates frames on the beams to each said gateway.

7. Satellite usable in a telecommunications system having a terrestrial segment with gateways giving access to a terrestrial network, the satellite comprising:
. on a forward path, a unit for routing transmitted messages frame by frame in TDM mode, and message-regeneration means; and
. on a return path, a transparent routing unit operating in F/DTMA mode with a distribution between groups of carriers belonging to a given beam.

## Patentansprüche

1. Telekommunikationssystem über einen geostationären Satelliten, umfassend ein Raumsegment mit mindestens einem Satelliten, der eine mehrstrahlige Telekommunikationsnutzlast trägt, und ein terrestrisches Segment, umfassend Zugangsbrücken (12) zum terrestrischen Netz, die jeweils einer unter der Reichweite jedes Strahls oder einer Strahlengruppe zugeteilt sind, und Benutzerendgeräte (22, 24), die zur Verbindung mit der Nutzlast des Satelliten mit funkelektrischen Mitteln versehen sind, **dadurch gekennzeichnet, dass** die Nutzlast umfasst:
- auf einer Hinbewegungsbahn einer Brücke zu einem Benutzerendgerät ein Führungselement von im Zeitmultiplex übertragenen Meldungen Raster für Raster, und
- auf einer Rückbewegungsbahn vom Benutzerendgerät zu einer Brücke ein Führungselement, das Trägerfrequenzgruppe für Trägerfrequenzgruppe, die einem selben Strahl angehören, arbeitet.

2. System nach Anspruch 1, **dadurch gekennzeichnet, dass** das Führungselement auf der Rückbewegungsbahn transparent ist.

3. System nach Anspruch 2, **dadurch gekennzeichnet, dass** das Führungselement auf der Rückbewegungsbahn einen Übertragungsmodus mit Trägerfrequenzvielfachzugriff verwendet, wobei für jede Trägerfrequenz eine Zuteilung jeder Meldung zu Zeitabschnitten desselben Rangs von aufeinanderfolgenden Rastern erfolgt.

4. System nach einem der Ansprüche 1 bis 3, **dadurch gekennzeichnet, dass** die Verbindungen zu den Benutzerendgeräten auf der Hinbewegungsbahn im Breitband-MRT, geteilt durch alle in einem selben Strahl befindlichen Benutzerendgeräte, erfolgen.

5. System nach Anspruch 1 oder 4, **dadurch gekennzeichnet, dass** das Element auf der Rückbewegungsbahn einen Verbindungsschalter (32) umfasst, dem ein Verstärker (34) und ein Durchlassbandfilter (36) und ein Demodulator (38) pro Strahl vorangestellt sind, und es ermöglicht, die Raster nach der Modulation (40) und der Verstärkung (42) zu den Ausgangsstrahlen zu führen.

6. System nach Anspruch 4 oder 5, **dadurch gekennzeichnet, dass** das Führungselement auf der Hinbewegungsbahn eine unabhängige Umschaltung der ansteigenden Raster gemäß einer Verbindungsmatrix durchführt, die sich an eine Speichertabelle hält, die von einem Netzsteuerungszentrum (18) berechnet wurde und jeder Brücke Raster auf den Übertragungsstrahlen zuordnet.

7. Satellit, der in einem Telekommunikationssystem mit einem terrestrischen Segment verwendet werden kann, umfassend Zugangsbrücken zum terrestrischen Netz, umfassend:
- auf einer Hinbewegungsbahn ein Führungselement von im Zeitmultiplex MRT übertragenen Meldungen Raster für Raster und Mittel zur Regeneration der Meldungen,
- auf einer Rückbewegungsbahn ein transparentes Führungselement, das Trägerfrequenzgruppe für Trägerfrequenzgruppe, die einem selben Strahl angehören, im AMRT/F-Modus arbeitet.
